# EUROPÄISCHE PATENTSCHRIFT

(11) **EP 3 374 096 B1**
(45) Veröffentlichungstag und Bekanntmachung des Hinweises auf die Patenterteilung: **16.02.2022**
(21) Anmeldenummer: 16791376.3
(22) Anmeldetag: 03.11.2016
(51) Int. Cl.: B07B 1/12, B07B 1/14, B07B 1/15, B07B 1/52, B07B 13/00, B29B 17/02

(54) **VERFAHREN UND SIEBVORRICHTUNG ZUM TRENNEN VON ALUMINIUMFLACHPRODUKTSTÜCKEN UND NICHT-METALLISCHEN ZWISCHENLAGENSTÜCKEN SOWIE VERWENDUNG DER SIEBVORRICHTUNG**
METHOD AND SCREENING APPARATUS FOR SEPARATING PIECES OF FLAT ALUMINIUM PRODUCT AND PIECES OF NON-METALLIC INTERMEDIATE LAYER, AND USE OF THE SCREENING APPARATUS
PROCÉDÉ ET DISPOSITIF DE TAMISAGE POUR SÉPARER DES FRAGMENTS DE PRODUITS PLATS EN ALUMINIUM ET DES FRAGMENTS DE COUCHES INTERMÉDIAIRES NON MÉTALLIQUES ET UTILISATION DU DISPOSITIF DE TAMISAGE

(30) Priorität: 11.11.2015 DE 102015119459
(43) Veröffentlichungstag der Anmeldung: 19.09.2018
(73) Patentinhaber: Speira GmbH, 41515 Grevenbroich (DE)
(72) Erfinder: BAUERSCHLAG, Nils, 52072 Aachen Aachen (DE); GILLNER, Ronald, 53913 Swisttal (DE)
(74) Vertreter: Cohausz & Florack
(86) Internationale Anmeldenummer: PCT/EP2016/076471
(87) Internationale Veröffentlichungsnummer: WO 2017/080893

(56) Entgegenhaltungen:
- EP-A1- 0 028 639
- EP-A1- 0 925 847
- EP-A2- 1 839 755
- EP-A2- 2 322 288
- DE-U1- 9 304 541
- GB-A- 2 145 612
- US-A1- 2008 105 597
- US-A1- 2011 100 884
- US-A1- 2012 190 102

## Beschreibung

Die Erfindung betrifft ein Verfahren zum Trennen von Aluminiumflachproduktstücken und nicht-metallischen Zwischenlagenstücken sowie eine Verwendung einer Siebvorrichtung zum Trennen von Aluminiumflachproduktstücken und nicht-metallischen Zwischenlagenstücken.

Bei der Herstellung lithografischer Druckplatten werden die empfindlichen Oberseiten der Druckplatten herstellerseitig typischerweise durch sogenannte Zwischenlagen aus Papier oder Kunststoff geschützt, die beim Aufeinanderstapeln der Druckplatten zwischen den einzelnen Druckplatten angeordnet werden.

Bei der Verarbeitung der lithografischen Druckplatten fallen daher Aluminiumschrotte an, die mit Fragmenten bzw. Stücken der Zwischenlagen verunreinigt sind. Beim Recycling der Aluminiumschrotte müssen diese Zwischenlagenstücke weitestgehend entfernt werden, da sie für den Schmelzprozess nachteilig sind bzw. die Qualität des beim Recycling zurückgewonnen Aluminiums verschlechtern können.

Das Trennen der Aluminiumschrotte von den Zwischenlagenstücken hat sich jedoch als schwierig herausgestellt, da die Zwischenlagenstücke recht stark an den Fragmenten der Druckplatten haften, insbesondere durch elektrostatische Aufladung oder ggf. auch durch eine Lackbeschichtung der Druckplatten.

Im Stand der Technik werden zur Abreicherung des Zwischenlagenmaterials in den Aluminiumschrotten von lithografischen Druckplatten die Zwischenlagenstücke entweder händisch oder über eine sogenannte Windsichtung von den Aluminiumstücken getrennt.

Eine händische Sortierung erfordert jedoch einen hohen Personalbedarf. Die Windsichtung kann zwar im Wesentlichen automatisch erfolgen, erfordert jedoch einen recht großen Installationsaufwand und erheblichen Bauraum.

Aus der EP 1 839 755 A2 sind ein Verfahren und eine Vorrichtung zum Trennen von nichtmetallischen Verunreinigungen und lithographischen Druckplatten mittels Fliehkraftabscheider, Wirbelstromabscheider sowie Separation aufgrund von Dichteunterschieden bekannt. Das Dokument EP 1 839 755 A2 offenbart ein Verfahren zum Trennen von Aluminiumflachproduktstücken und nicht-metallischen Zwischenlagenstücken gemäß dem Oberbegriff des Anspruchs 1.

Aus der US 2011/100884 A1 ist eine Vorrichtung zum Trennen von unterschiedlichen Papier- und Kartonsorten bekannt.

Vor diesem Hintergrund liegt der vorliegenden Erfindung die Aufgabe zu Grunde, ein Verfahren zum Trennen von Aluminiumflachproduktstücken und nicht-metallischen Zwischenlagenstücken bereit zu stellen, das zur Durchführung einen geringeren Installationsaufwand und einen geringeren Bauraum erfordert und im Wesentlichen automatisiert abläuft, so dass das Verfahren insgesamt wirtschaftlicher durchgeführt werden kann.

Diese Aufgabe wird erfindungsgemäß gelöst durch ein Verfahren zum Trennen von Aluminiumflachproduktstücken und nicht-metallischen Zwischenlagenstücken gemäß Anspruch 1, umfassend folgende Schritte:
- Bereitstellen eines Gemischs umfassend Aluminiumflachproduktstücke, bei denen es sich um lithografische Druckplattenträger und/oder lithografische Druckplatten, Stücke von lithografischen Druckplattenträgern und/oder von lithografischen Druckplatten oder bei der Herstellung von lithografischen Druckplatten anfallende Stücke von Aluminiumbändern handelt, und nicht-metallische Zwischenlagenstücke, und
- Sieben des Gemischs zur Trennung der nicht-metallischen Zwischenlagenstücke von den Aluminiumflachproduktstücken, wobei das Sieben unter Verwendung eines Scheibensiebs, insbesondere eines Sternsiebs, erfolgt.

Weiterhin wird eine Siebvorrichtung zum Trennen von Aluminiumflachproduktstücken und nicht-metallischen Zwischenlagenstücken, insbesondere zur Verwendung in dem zuvor beschriebenen Verfahren, mit einem Scheibensieb, das mehrere hintereinander angeordnete, drehbar gelagerte Wellen umfasst, auf denen jeweils mehrere in axialer Richtung voneinander beabstandete Scheiben angeordnet sind, offenbart.

Bei den Scheiben kann es sich beispielsweise um Scheiben mit einem runden Querschnitt handeln.

Weiterhin wird die oben genannte Aufgabe erfindungsgemäß gelöst durch die Verwendung, gemäß Anspruch 5, einer Siebvorrichtung zum Trennen von Aluminiumflachproduktstücken, und von nicht-metallischen Zwischenlagenstücken, wobei es sich bei den Aluminiumflachproduktstücken um lithografische Druckplattenträger und/oder lithografische Druckplatten, Stücke von lithografischen Druckplattenträgern und/oder lithografischen Druckplatten oder Stücke von Aluminiumbändern, die bei der Herstellung von lithografischen Druckplatten anfallen, handelt.

Es wurde festgestellt, dass Aluminiumflachproduktstücke und nicht-metallische Zwischenlagenstücke sich sehr einfach und effektiv durch Siebung mittels eines Scheibensiebs voneinander trennen lassen. Bei der Siebung werden die nicht-metallischen Zwischenlagenstücke, insbesondere Papierzwischenlagenstücke, von den Aluminiumflachproduktstücken getrennt. Insbesondere wird bei der Siebung mittels eines Scheibensiebs die Formstabilität des Aluminiums bzw. der Aluminiumflachproduktstücke gegenüber den nicht formstabilen nicht-metallischen Zwischenlagenstücken ausgenutzt. Die nicht formstabilen Zwischenlagenstücke werden beim Sieben mit dem Scheibensieb verformt und gelangen als Siebdurchgang durch die Sieböffnungen des Scheibensiebs in den Siebunterlauf. Die formstabilen Aluminiumflachproduktstücke verbleiben demgegenüber oberhalb des Scheibensiebs und damit im Siebüberlauf.

Insbesondere sind die Zwischenlagenstücke insoweit nicht formstabil, dass sie unter ihrem eigenen Gewicht derart nach unten biegen, dass sie durch die Sieböffnungen in den Siebunterlauf des Scheibensiebs gelangen. Die Aluminiumflachproduktstücke sind insbesondere insoweit formstabil, dass sie bei Auflage auf den Scheiben der Wellen derart gehalten werden, dass sie nicht durch die Sieböffnungen des Scheibensiebs gelangen.

Das Sieben mittels eines Scheibensiebs hat gegenüber einer Windsichtung den Vorteil, dass ein nahezu staub- und abluftfreier Betrieb der Anlage ermöglicht wird, wodurch erheblicher Bauraum und Konstruktionsaufwand eingespart wird. Insbesondere ist der Platzbedarf für eine Siebung deutlich geringer als für eine Windsichtung. Gegenüber der händischen Sortierung hat das Sieben den Vorteil, dass ein im Wesentlichen automatisierter Betrieb mit geringerem Personalaufwand möglich ist und unter Einhaltung arbeitsschutzrechtlicher Standards (wie z.B. des HSE-Standards), ein erhöhter Durchsatz realisiert werden kann.

Das Verfahren dient zum Trennen von Aluminiumflachproduktstücken und nicht-metallischen Zwischenlagenstücken. Unter Aluminiumflachproduktstücken werden Stücke bzw. Fragmente von Aluminiumflachprodukten wie zum Beispiel von Aluminiumblechen oder Aluminiumfolien verstanden. Bei den Aluminiumflachproduktstücken handelt es sich um Stücke bzw. Fragmente von lithografischen Druckplattenträgern bzw. lithografischen Druckplatten

Unter Aluminiumflachproduktstücken werden vorliegend auch ganze lithografische Druckplattenträger bzw. lithografische Druckplatten verstanden. Es können also auch ganze, unzerkleinerte Druckplatten verarbeiten werden. Unter Aluminiumflachproduktstücken werden vorliegend auch Stücke bzw. Fragmente von Aluminiumbändern verstanden, wie sie beispielsweise bei der Herstellung von lithografischer Druckplatten anfallen können, z.B. durch Kantenbeschnitt eines Aluminiumbands vor dem Abtafeln zu einzelnen Druckplatten. Die Dicke der Aluminiumflachproduktstücke kann insbesondere im Bereich von 10 µm bis 3000 µm, insbesondere von 100 µm bis 500 µm liegen.

Bei den nicht-metallischen Zwischenlagenstücken kann es sich insbesondere um Stücke bzw. Fragmente aus Papierzwischenlagen und/oder Kunststoffzwischenlagen handeln, die beispielsweise beim Aufeinanderstapeln lithographischer Druckplatten zwischen die Druckplatten gelegt werden. Die Grammatur, d.h. das Flächengewicht, der Zwischenlagenstücke kann insbesondere zwischen 10 g/m² und 200 g/m² liegen. Die Dicke der Zwischenlagenstücke kann insbesondere im Bereich 10 µm bis 500µm liegen.

Die Aluminiumflachproduktstücke und/oder Zwischenlagenstücke können beispielsweise je eine derartige Größenverteilung aufweisen, dass mindestens 50 %, insbesondere mindestens 90 % der Aluminiumflachproduktstücke bzw. Zwischenlagenstücke eine Fläche im Bereich von 1/64 m² (DIN A6) bis 1 m² (DIN A0) aufweisen.

Bei dem Verfahren wird ein Gemisch umfassend Aluminiumflachproduktstücke und nicht-metallische Zwischenlagenstücke bereitgestellt. Insbesondere kann das Gemisch aus Produktionsabfällen oder Abfällen nach der Verwendung lithografischer Druckplatten bereitgestellt werden.

Das Gemisch wird zur Trennung der nicht-metallischen Zwischenlagenstücke von den Aluminiumflachproduktstücken unter Verwendung eines Scheibensiebs gesiebt. Unter einem Scheibensieb wird vorliegend ein Sieb verstanden, das mehrere hintereinander angeordnete Wellen umfasst, auf denen jeweils mehrere in axialer Richtung voneinander beabstandete Scheiben angeordnet sind. Die Wellen sind vorzugsweise drehbar gelagert. In diesem Fall sind die Scheiben vorzugsweise drehfest mit den Wellen verbunden. Alternativ können die Scheiben auch drehbar auf den Wellen angeordnet sein.

Unter mehreren hintereinander angeordneten Wellen wird verstanden, dass die Wellen, insbesondere in einer im Wesentlichen senkrecht zu ihrer Erstreckungsrichtung verlaufenden Richtung (Siebrichtung), derart nebeneinander angeordnet sind, dass sie mit den auf den Wellen vorgesehenen Scheiben das Scheibensieb bilden. Die Wellen und Scheiben können somit als Siebbelag des Scheibensiebs angesehen werden. Die Zwischenräume zwischen den Wellen und Scheiben bilden die Sieböffnungen des Scheibensiebs. Die Siebrichtung kann im Wesentlichen horizontal ausgebildet sein, so dass die nebeneinander angeordneten Wellen eine im Wesentlichen horizontale Siebebene definieren. Alternativ kann die Siebrichtung auch schräg zur horizontalen Ebene ausgebildet sein, so dass die Siebebene ein Gefälle oder eine Steigung aufweist, insbesondere mit einem Winkel zur Horizontalen zwischen 0° und 45°, bevorzugt zwischen 0° und 20°. Bei einem Gefälle oder einer Steigung der Siebebene beträgt der Winkel zur Horizontalen vorzugsweise mindestens 1°, insbesondere mindestens 5°. Vorzugsweise ist der Winkel der Siebebene zur Horizontalen einstellbar, insbesondere in den zuvor genannten Bereichen.

Die Sieböffnungsweite des Scheibensiebs wird einerseits über den Abstand der Wellen zueinander und andererseits über den Abstand der auf den Wellen angeordneten Scheiben definiert. Bei einem geringeren (bzw. größeren) Abstand der Wellen zueinander ist die Sieböffnungweite entsprechend geringer (bzw. größer). Ebenso ist bei einem geringeren (bzw. größeren) Abstand der Scheiben zueinander die Sieböffnungsweite entsprechend geringer (bzw. größer). Die Sieböffnungsweite kann insbesondere an die Dicke der Aluminiumflachproduktstücke angepasst werden. Bei geringeren Dicken, bei denen die Aluminiumflachproduktstücke eine entsprechend geringere Formstabilität aufweisen, werden vorzugsweise geringere Sieböffnungsweiten gewählt.

Der Abstand der Wellen zueinander entspricht mindestens dem Radius der Scheiben. Die Scheiben können beispielsweise einen Durchmesser im Bereich von 20 - 1500 mm aufweisen. Der Abstand der Scheiben einer Welle zueinander entspricht insbesondere mindestens der Scheibenbreite. Die Scheiben können beispielsweise eine Breite im Bereich von 5 - 500 mm aufweisen.

Der Abstand der Wellen zueinander kann insbesondere auch so gewählt werden, dass zwischen den Scheiben benachbarter Wellen in Siebrichtung ein Freiraum verbleibt, die Scheiben benachbarter Wellen also nicht ineinander kämmen. Zu diesem Zweck ist der Abstand der Wellen zueinander insbesondere größer als die Summe aus dem Radius der größten Scheibe einer Welle und dem Radius der größten Scheibe der jeweils benachbarten Welle. Diese beabstandete Konfiguration der Wellen ist vorteilhaft, wenn das zu siebende Gemisch große Aluminiumflachproduktstücke bzw. Zwischenlagenstücke enthält, beispielsweise ganze Druckplatten. Insbesondere können auf diese Weise große Zwischenlagenstücke einfacher zwischen den Wellen hindurch in den Siebunterlauf gelangen.

Vorzugsweise sind mindestens eine, vorzugsweise mehrere der Wellen angetrieben. Zu diesem Zweck kann beispielsweise ein Antrieb wie zum Beispiel ein Motor vorgesehen sein, der dazu eingerichtet ist, die Wellen anzutreiben. Die Scheiben der angetriebenen Wellen sind vorzugsweise drehfest mit den jeweiligen Wellen verbunden. Durch das Antreiben einer oder mehrerer Wellen kann das zu siebende Gemisch über das Scheibensieb transportiert werden. Weiterhin führen die rotierenden Scheiben des Scheibensiebs zu einer Verformung der nicht formstabilen Stücke des Gemischs, vorliegend also insbesondere der nicht-metallischen Zwischenlagenstücke, so dass diese durch die Sieböffnungen durch das Scheibensieb hindurch gelangen. Die Scheiben des Scheibensiebs können zudem auch als Mitnehmer fungieren, durch die die nicht-metallischen Zwischenlagenstücke durch die Sieböffnungen transportiert werden.

Während des Verfahrens werden eine oder mehrere Wellen vorzugsweise mit einer Drehzahl der Wellen von 1 - 100 RPM (Umdrehungen pro Minute), vorzugsweise 10 - 30 RPM angetrieben. Insbesondere ist der hierzu vorgesehene Antrieb dazu eingerichtet, eine oder mehrere Wellen mit Drehzahlen in diesem Bereich anzutreiben.

Das Scheibensieb kann beispielsweise eine Breite zwischen 0,5 m und 10 m aufweisen, d.h. die Wellen können eine entsprechende Länge aufweisen. Weiterhin kann das Scheibensieb beispielsweise eine Länge, d.h. einen Abstand von der ersten zur letzten Welle des Siebs, von 1 bis 15 m aufweisen. Die Anzahl der Wellen und Scheiben kann grundsätzlich bedarfsgemäß gewählt werden, insbesondere angepasst an die Breite und Länge des Scheibensiebs sowie an die gewünschte Sieböffnungsweite.

Zum Sieben des Gemischs wird das Gemisch auf die Oberseite des Scheibensiebs, d.h. insbesondere auf die Scheiben der Wellen gegeben. Insbesondere kann das Gemisch an einer ersten Seite (Startseite) des Scheibensiebs auf die Scheiben gegeben und während des Siebvorgangs über das Scheibensieb transportiert werden, insbesondere durch die Drehung der Scheiben und/oder ein Gefälle des Scheibensiebs.

Die Aluminiumflachproduktstücke verbleiben aufgrund ihrer Formstabilität im Wesentlichen auf der Oberseite des Scheibensiebs, während die nicht-metallischen Zwischenlagenstücke durch die Öffnungen des Scheibensiebs hindurch auf dessen Unterseite gelangen. Auf diese Weise werden die Aluminiumflachproduktstücke und die nicht-metallischen Zwischenlagenstücke voneinander getrennt.

Anschließend können die Aluminiumflachproduktstücke aus dem Siebüberlauf und die nicht-metallischen Zwischenlagenstücke aus dem Siebunterlauf und damit separat voneinander abgeführt werden.

Im Folgenden werden verschiedene Ausführungsformen des Verfahrens, der Siebvorrichtung und der Verwendung beschrieben, wobei die einzelnen Ausführungsformen jeweils sowohl für das Verfahren als auch für die Siebvorrichtung und die Verwendung anwendbar sind und zudem untereinander kombiniert werden können.

Bei einer ersten Ausführungsform des Verfahrens erfolgt das Sieben unter Verwendung der zuvor beschriebenen Siebvorrichtung bzw. einer Ausführungsform davon. Es hat sich herausgestellt, dass diese Siebvorrichtung besonders geeignet ist, um das Verfahren zum Trennen von Aluminiumflachproduktstücken und nicht-metallischen Zwischenlagenstücken durchzuführen.

Bei einer weiteren Ausführungsform umfasst das Verfahren folgenden Schritt:
- Zerkleinern des bereitgestellten Gemischs vor dem Sieben.

Unter dem Zerkleinern des Gemischs wird verstanden, dass das Gemisch einem Zerkleinerungsschritt unterzogen wird, bei dem Aluminiumflachproduktstücke und nicht-metallische Zwischenlagenstücke des Gemischs (ggf. weiter) zerkleinert werden. Auf diese Weise können die Aluminiumflachproduktstücke und nicht-metallischen Zwischenlagenstücke auf eine für das Sieben vorteilhafte Größe zerkleinert werden. Die Zerkleinerung kann beispielsweise schneidend und/oder scherend erfolgen, insbesondere unter Verwendung einer Rotorschere oder einer Schrottschere erfolgen.

Bei einer weiteren Ausführungsform weisen die Aluminiumflachproduktstücke und/oder Zwischenlagenstücke eine derartige Größenverteilung auf, dass mindestens 50 %, vorzugsweise mindestens 90 % der Aluminiumflachproduktstücke bzw. Zwischenlagenstücke eine Fläche im Bereich von 1/64 m² (DIN A6) bis 1 m² (DIN A0) aufweisen. Diese Größenverteilung kann beispielsweise von Anfang an vorliegen oder auch durch den zuvor beschriebenen Zerkleinerungsschritt herbeigeführt werden. Die Aluminiumflachproduktstücke und/oder Zwischenlagenstücke können beispielsweise eine Längserstreckung von 5 - 5000 mm Länge und eine Quererstreckung von 5 - 2000 mm Breite aufweisen. Vorzugsweise weisen mindestens 50 %, insbesondere mindestens 90 % der Aluminiumflachproduktstücke und/oder Zwischenlagenstücke eine Größe in diesem Bereich auf.

Bei einer weiteren Ausführungsform umfasst das Verfahren folgende Schritte:
- Abführung der Aluminiumflachproduktstücke vom Siebüberlauf des Scheibensiebs und
- Abführen der nicht-metallischen Zwischenlagenstücke vom Siebunterlauf des Scheibensiebs.

Unter dem Siebüberlauf des Scheibensiebs wird das Material verstanden, das nach dem Sieben auf dem Scheibensieb verblieben ist. Unter dem Siebunterlauf wird das Material verstanden, das beim Sieben durch die Sieböffnungen des Scheibensiebs gelangt ist.

Bei einer weiteren Ausführungsform umfasst das Gemisch als Aluminiumflachproduktstücke Stücke von lithografischen Druckplattenträgern bzw. lithografischen Druckplatten. Zwischenlagen werden insbesondere bei lithographischen Druckplatten verwendet, so dass das beschriebene Verfahren bevorzugt zum Trennen derartiger Produkte eingesetzt werden kann.

Bei einer weiteren Ausführungsform umfasst das Gemisch als nicht-metallische Zwischenlagenstücke insbesondere Stücke von Papierzwischenlagen und/oder Stücke von Kunststofffolien.

Bei einer Ausführungsform der Siebvorrichtung sind die Scheiben zweier benachbarter Wellen jeweils derart versetzt zueinander angeordnet, dass die Scheiben einer Welle in axialer Richtung jeweils in den Bereichen zwischen den Scheiben der benachbarten Welle angeordnet sind.

Bei einer Ausführungsform der Siebvorrichtung können die Scheiben benachbarter Wellen ineinander kämmen. Hierunter wird verstanden, dass die Scheiben zweier benachbarter Wellen in Siebrichtung überlappen. Auf diese Weise können in Siebrichtung kleinere Sieböffnungsweiten erreicht werden.

Bei einer weiteren Ausführungsform weist eine Welle ein drehfest mit der Welle verbundenes Mitnehmerelement auf. Das Mitnehmerelement ist vorzugsweise flexibel bzw. nicht-formstabil ausgebildet. Beispielsweise kann das Mitnehmerelement gurtartig ausgebildet sein. Es wurde festgestellt, dass die Trennung der Zwischenlagenstücke von den Aluminiumflachproduktstücken durch ein solches Mitnehmerelement verbessert werden kann. Das Mitnehmerelement dient dazu, Zwischenlagenstücke durch Reibung aus dem Gemisch und durch die Sieböffnungen mitzunehmen. Das mit der Welle mitdrehende Mitnehmerelement kann insbesondere schlagend oder peitschenartig auf das Gemische einwirken und/oder über das Gemisch gleiten und durch Reibungskraft zwischen dem Mitnehmerelement und einem Zwischenlagenstück ein solches Zwischenlagenstück aus dem Gemisch mitnehmen.

Zur Erhöhung der Reibungswirkung ist das Mitnehmerelement vorzugsweise aus einem Kunststoff oder Gummi gebildet oder mit einem Kunststoff oder Gummi beschichtet. Bei dem Kunststoff handelt es sich bevorzugt um ein Elastomer. Beispielsweise kann das Mitnehmerelement durch ein mit Kunststoff oder Gummi beschichtetes Drahtgeflecht gebildet werden.

Das Mitnehmerelement kann insbesondere neben einer oder zwischen zwei benachbarten Scheiben der Welle angeordnet sein. Vorzugsweise erstreckt sich das Mitnehmerelement in radialer Richtung der Welle über eine benachbarte Scheibe der Welle hinaus. Das Mitnehmerelement erstreckt sich also weiter von der Welle als mindestens eine, vorzugsweise zwei benachbarte Scheiben und kann damit auch Zwischenlagenstücke erfassen, die noch nicht in den Bereich zwischen die Scheiben gelangt sind.

Das Mitnehmerelement ist vorzugsweise so auf der entsprechenden Welle positioniert, dass es versetzt zu den Wellen einer oder zweier benachbarter Wellen angeordnet ist. Dadurch kann das Mitnehmerelement Zwischenlagenstücke in eine Sieböffnung zwischen den Scheiben zweier benachbarter Wellen hineinziehen.

Um die Trennung des Gemischs weiter zu verbessern, kann das Scheibensieb eine Mehrzahl gleichartiger oder verschiedenartiger Mitnehmerelemente aufweisen. Beispielsweise können mehrere Mitnehmerelemente auf einer Welle angeordnet werden. Zusätzlich oder alternativ können Mitnehmerelemente auf mehreren Wellen vorgesehen werden.

Bei einer weiteren Ausführungsform weist die Siebvorrichtung einen von oben auf das Scheibensieb einwirkenden Mitnehmer auf. Der Mitnehmer umfasst vorzugsweise einen sich im Wesentlichen parallel zu einer Welle des Scheibensiebs erstreckenden Mitnehmerkörper, beispielsweise in Forms Rohrs oder Langprofils. An dem Mitnehmerkörper kann ein Lamellenvorhang angebracht sein, wobei die Lamellen des Lamellenvorhangs vorzugswese aus Kunststoff oder Gummi sind oder mit Kunststoff oder Gummi beschichtet sind, um einen hohen Reibbeiwert zu erreichen. Der Mitnehmer ist in Siebrichtung vorzugsweise zwischen zwei benachbarten Wellen angeordnet. Die Siebvorrichtung kann auch eine Mehrzahl derartiger Mitnehmer aufweisen.

Der Mitnehmer ist vorzugsweise beweglich gelagert, so dass der Mitnehmer einerseits an einer vorgegebenen Position gegenüber dem Scheibensieb positioniert wird und andererseits gegenüber dieser Position noch beweglich ist, um dem Materialstrom des Gemischs auf dem Scheibensieb bis zu einem gewissen Grad ausweichen zu können bzw. der Bewegung der Scheiben folgen zu können, insbesondere wenn es sich nicht um Kreisscheiben, sondern beispielsweise um ovale Scheiben oder Sternscheiben handelt. Die bewegliche Lagerung erfolgt vorzugsweise mittels einer Aufhängung. Durch eine solche Aufhängung wird der Mitnehmer in Bezug auf das Scheibensieb positioniert, beispielsweise zwischen zwei benachbarten Wellen und/oder parallel zu einer Welle des Scheibensiebs, kann jedoch insbesondere noch nach oben ausweichen. Die Aufhängung ist vorzugsweise federnd ausgebildet und umfasst entsprechend vorzugsweise eine Feder und weiter bevorzugt zusätzlich einen Dämpfer, um Schwingungen zu dämpfen.

Mit einem solchen Mitnehmer kann die Trennung der Zwischenlagenstücke von den Aluminiumflachproduktstücken verbessert werden. Insbesondere können beispielsweise an der Oberseite eines Materialstrom angeordnete Zwischenlagenstücke, insbesondere auf der Oberseite von Aluminiumflachproduktstücken haftende Zwischenlagenstücke, mittels Reibkraft durch den Mitnehmer von den Aluminiumflachproduktstücken getrennt werden, so dass diese Zwischenlagenstücke in Richtung der Sieböffnungen gelangen können und hier ggf. durch einen vorzugsweise ebenfalls vorgesehenes Mitnehmerelement erfasst und durch die Sieböffnungen hindurch geführt werden können.

Zur Erhöhung der Reibungswirkung ist der Mitnehmer vorzugsweise aus einem Kunststoff oder Gummi gebildet oder mit einem Kunststoff oder Gummi beschichtet. Bei dem Kunststoff handelt es sich bevorzugt um ein Elastomer. Beispielsweise kann der Mitnehmer durch ein mit Kunststoff oder Gummi beschichtetes Metallrohr oder Metallprofil gebildet werden.

Bei einer weiteren Ausführungsform der Siebvorrichtung sind mindestens eine, vorzugsweise mehrere der Scheiben als Sternscheiben ausgebildet. Unter Sternscheiben werden Scheiben mit einem sternförmigen Querschnitt verstanden, wie sie bei Sternsieben verwendet werden. Für die Scheiben sind auch andere Formen denkbar, beispielsweise können anstelle oder zusätzlich zu runden und/oder sternförmigen Scheiben auch ovale oder anders geformte Scheiben verwendet werden.

Durch die Verwendung von Sternscheiben und/oder anderen nicht-kreisrunden Scheiben wird das zu siebende Gemisch höheren mechanischen Beanspruchungen unterzogen und zudem zusätzlich in vertikaler Richtung ausgelenkt. Hierdurch kann eine effektivere Siebung erreicht werden.

Um die Trennung der Zwischenlagenstücke von den Aluminiumflachproduktstücken zu verbessern, können mindestens eine, vorzugsweise mehrere der Scheiben des Scheibensiebs mit einer Gummi- oder Kunststoffbeschichtung versehen sein. Auf diese Weise wird der Reibbeiwert der entsprechenden Scheiben erhöht, so dass eine verbesserte Mitnahme der Zwischenlagenstücke durch die Sieböffnungen erfolgen kann. Die Scheiben des Scheibensiebs können beispielsweise einen Stahlkern mit einer Gummi- oder Kunststoffbeschichtung aufweisen. Da Gummi- bzw. Kunststoffoberflächen höhere Reibbeiwerte aufweisen als Stahl, können auf diese Weise höhere Reibbeiwerte erreicht werden als mit reinen Stahlscheiben

Bei einer weiteren Ausführungsform ist das Scheibensieb mehrstufig ausgebildet. Hierunter wird verstanden, dass die Wellen des Scheibensiebs in verschiedenen Stufen angeordnet sind. Bei einer zweistufigen Ausbildung kann ein erster Teil der Wellen in einer Ebene angeordnet und ein zweiter Teil der Wellen in einer zweiten, darunter liegenden Ebene angeordnet sein. Auf diese Weise fällt der Materialstrom des Gemischs beim Transport über das Scheibensieb in Siebrichtung von der höheren auf die niedrigere Stufe, so dass Aluminiumflachproduktstücke des Gemischs gewendet werden und dadurch anliegende Zwischenlagenstücke freigegeben und somit besser von den Aluminiumflachproduktstücken getrennt werden können.

Weitere Vorteile und Merkmale der vorliegenden Erfindung ergeben sich aus der nachfolgenden Beschreibung von Ausführungsbeispielen, wobei auf die beigefügte Zeichnung Bezug genommen wird.

In der Zeichnung zeigen
- Fig. 1: ein Ausführungsbeispiel des erfindungsgemäßen Verfahrens und ein Ausführungsbeispiel der erfindungsgemäßen Siebvorrichtung in schematischer Seitenansicht,

- Fig. 2: eine Detaildarstellung der Siebvorrichtung aus Fig. 1 in Aufsicht,
- Fig. 3: eine Detaildarstellung der Siebvorrichtung aus Fig. 1 in Schnittansicht,
- Fig. 4a-g: mögliche Scheibenformen für die Siebvorrichtung aus Fig. 1.

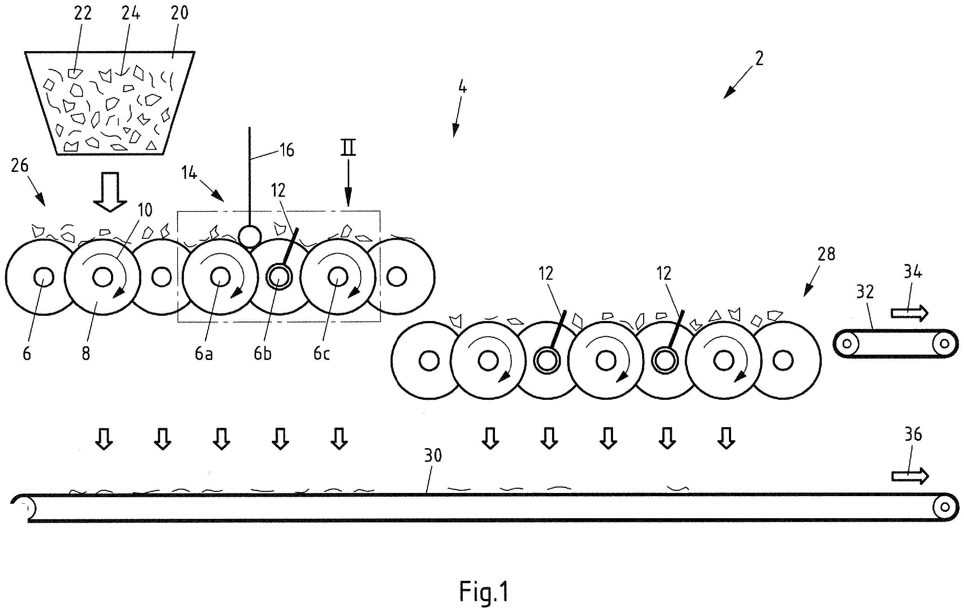

Figur 1 zeigt ein Ausführungsbeispiel des erfindungsgemäßen Verfahrens und ein Ausführungsbeispiel einer Siebvorrichtung zum Trennen von Aluminiumflachproduktstücken und nicht-metallischen Zwischenlagenstücken.

Die Siebvorrichtung 2 umfasst ein Scheibensieb 4, welches mehrere hintereinander angeordnete und voneinander beabstandete Wellen 6 aufweist, auf denen jeweils mehrere Scheiben 8 montiert sind.

Die Wellen 6 sind bei dem Ausführungsbeispiel in zwei Stufen angeordnet, d.h. das Scheibensieb 4 ist zweistufig ausgebildet. Alternativ kann das Scheibensieb 4 auch einstufig ausgebildet sein oder auch mehr als zwei Stufen aufweisen.

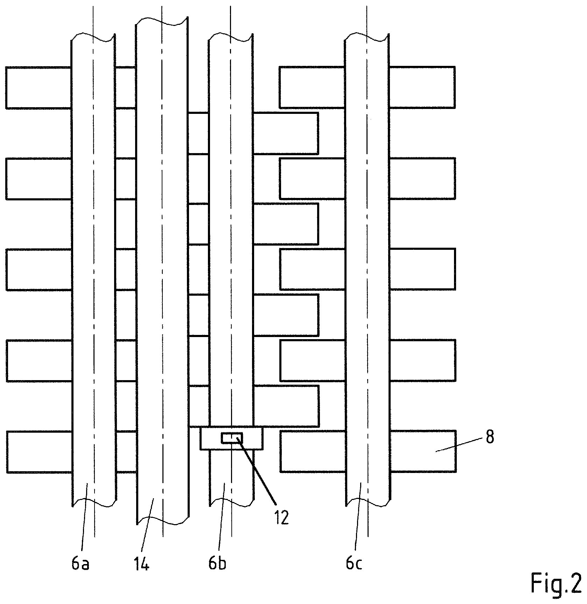

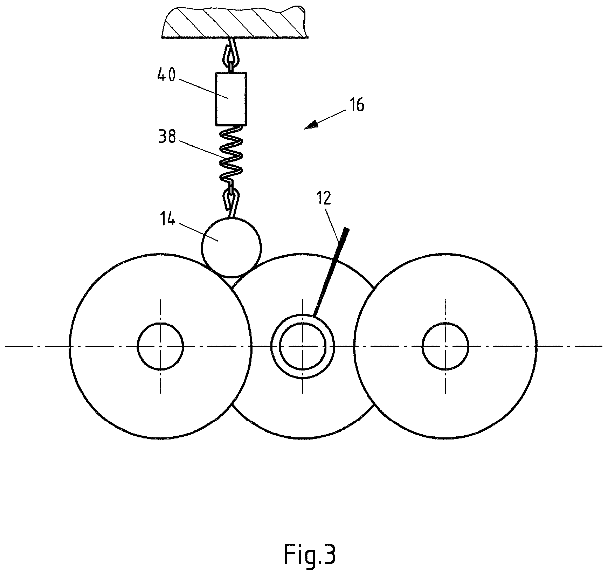

Fig. 2 zeigt exemplarisch drei als 6a-c bezeichnete Wellen der Wellen 6 des Scheibensiebs 4 in schematischer Aufsicht. In Fig. 1 ist der entsprechende Ausschnitt mit der mit "II" bezeichneten strichpunktierten Umrandung hervorgehoben. Fig. 3 zeigt eine Seitenansicht des Ausschnitts aus Fig. 2.

Wie Fig. 2 zeigt, sind die Scheiben 8 auf den Wellen 6a-c in axialer Richtung, d.h. in Erstreckungsrichtung der Wellen 6a-c, jeweils beabstandet zueinander angeordnet. Zudem sind die Scheiben 8 der Welle 6b zu den Scheiben 8 der benachbarten Wellen 6a und 6c derart versetzt angeordnet, dass die Scheiben 8 der Welle 6b in axialer Richtung jeweils in den Bereichen zwischen den Scheiben 8 der Wellen 6a und 6c angeordnet sind. Der Abstand der Wellen 6a bis 6c und die Größe der Scheiben 8 sind jeweils so bemessen, dass die Scheiben benachbarter Wellen überlappen und so ineinander kämmen.

Alternativ können die Abstände zwischen den Wellen 6a bis 6c auch so gewählt werden, dass zwischen den Scheiben 8 benachbarter Wellen 6 in Siebrichtung ein Freiraum verbleibt, die Scheiben 8 benachbarter Wellen 6 also nicht ineinander kämmen. Diese Ausführungsform ist vorteilhaft, wenn das zu siebende Gemisch große Aluminiumflachproduktstücke bzw. Zwischenlagenstücke enthält, beispielsweise ganze Druckplatten.

Die Scheiben 8 sind in Fig. 1 mit einem kreisförmigen Querschnitt gezeigt. Alternativ können eine, mehrere oder alle Scheiben 8 auch einen anderen Querschnitt aufweisen.

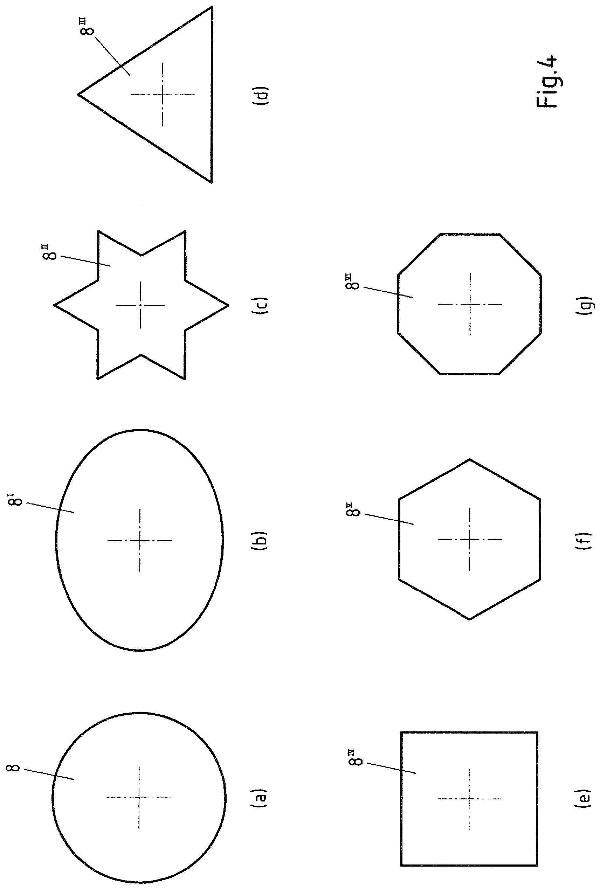

Fig. 4 zeigt Beispiele für mögliche Querschnitte der Scheiben 8. So zeigt Fig. 4a eine Scheibe 8 mit einem kreisförmigen Querschnitt, Fig. 4b eine Scheibe 8^{I} mit einem ovalen Querschnitt, Fig. 4c eine Scheibe 8^{II} mit einem sternförmigen Querschnitt (sogenannte Sternscheiben), Fig. 4d eine Scheiben 8^{III} mit dreieckigem Querschnitt, Fig. 4e eine Scheibe 8^{IV} mit viereckigem Querschnitt, Fig. 8f eine Scheibe 8^{V} mit sechseckigem Querschnitt und Fig. 8g eine Scheibe 8^{VI} mit achteckigem Querschnitt.

Die Wellen 6 des Scheibensiebs 4 sind drehbar gelagert und vorzugsweise angetrieben mittels einer vorgesehenen Antriebseinheit, die in Fig. 1 schematisch durch die Pfeile 10 dargestellt ist. Die Wellen 6 können beispielsweise gemeinsam über ein Getriebe von einem einzelnen Motor (nicht dargestellt) angetrieben werden. Alternativ können auch mehrere Motoren vorgesehen werden, beispielsweise ein Motor für jede Stufe des Scheibensiebs 4.

Die Siebvorrichtung 2 weist vorzugsweise einen oder mehrere Mitnehmerelemente 12 auf, die jeweils drehfest mit einer Welle 6 des Scheibensiebs 4 verbunden sind. Die Mitnehmerelemente 12 sind auf der jeweiligen Welle 6 vorzugsweise neben oder zwischen den Scheiben 8 angeordnet und erstrecken sich in radialer Richtung der Welle 6 über die benachbarten Scheiben 8 hinaus.

Vorzugsweise sind die Mitnehmerelemente 12 wie in Fig. 2 auf ihrer Welle 6 derart angeordnet, dass sie in axialer Richtung zwischen zwei benachbarten Scheiben einer benachbarten Welle angeordnet ist. Das Mitnehmerelement 12 sitzt also vorzugsweise an einer axialen Position einer Welle 6, an der auch bei der benachbarten Welle 6 keine Scheiben 8 angeordnet sind.

Ein Mitnehmerelement 12 umfasst vorzugsweise eine Kunststoff- oder Gummibeschichtung, so dass es an der Oberfläche einen recht hohen Reibbeiwert aufweist. Beispielsweise kann das Mitnehmerelement 12 ein mit Kunststoff oder Gummi umspritztes Drahtgeflecht aufweisen.

Alternativ oder zusätzlich kann die Siebvorrichtung 2 einen von oben auf das Scheibensieb 4 einwirkenden Mitnehmer 14 aufweisen, der mittels einer federnden Aufhängung 16 zwischen zwei benachbarten Wellen, vorliegend den Wellen 6a und 6b, angeordnet ist. Durch die federnde Aufhängung kann sich der Mitnehmer 14 aus seiner ursprünglichen Position heraus bewegen, beispielsweise weil zu siebendes Material zwischen dem Mitnehmer 14 und den Scheiben 8 des Scheibensiebs 4 gefördert wird oder (bei exzentrischen Scheiben 8 oder nicht kreisförmigen Scheiben) der Mitnehmer 14 durch die Drehung der Scheiben 8 ausgelenkt wird. Die federnde Aufhängung 16 kann wie in Fig. 3 dargestellt beispielsweise eine Feder 38 und einen Dämpfer 40 umfassen, wobei der Dämpfer 40 Schwingungen des Mitnehmers 14 dämpft. Der Mitnehmer 14 kann beispielsweise als mit einer Kunststoff- oder Gummibeschichtung versehenes Metallrohr oder Metallprofil ausgebildet sein, das sich parallel zu den Wellen 6a, 6b erstreckt.

Das Scheibensieb 4 weist noch weitere Komponenten auf, beispielsweise einen Rahmen, in dem die Wellen 6 gelagert sind. Diese zusätzlichen Komponenten sind in den Figuren 1 - 3 der Übersichtlichkeit halber jedoch nicht dargestellt.

Nachfolgend wird die Funktionsweise der Siebvorrichtung 2 anhand eines Ausführungsbeispiels des Verfahrens erläutert.

Bei dem Verfahren wird zunächst ein Gemisch 20 umfassend Aluminiumflachproduktstücke 22 und Papierzwischenlagenstücke 24 bereitgestellt. Das Gemisch 20 kann beispielsweise bei der Herstellung oder Verwendung von lithografischen Druckplattenträgern bzw. Druckplatten als Schrott angefallen sein. Bei Bedarf kann das Gemisch 20 noch einer Zerkleinerungsvorrichtung (nicht dargestellt), z.B. einem Schredder, zugeführt werden, um die gewünschte Größenverteilung der Aluminiumflachproduktstücke 22 und Papierzwischenlagenstücke 24 zu erreichen.

Das Gemisch 20 wird sodann mittels einer Zuführung 26 an einer ersten Seite 26 (Startseite) auf das Scheibensieb 4 gegeben. Die Wellen 6 des Scheibensiebs 4 werden in Richtung des Pfeils 10 angetrieben, so dass das Gemisch 20 über das Scheibensieb 4 gefördert wird bis zu einer zweiten Seite 28 (Endseite) des Siebs.

Während der Förderung des Gemischs 20 über das Scheibensieb 4 gelangen die nicht-formstabilen Zwischenlagenstücke 24 zwischen den Wellen 6 und Scheiben 8 des Scheibensiebs 4, d.h. durch die Sieböffnungen des Scheibensiebs 4, und somit in den Siebunterlauf, während die formstabilen Aluminiumflachproduktstücke 22 auf dem Siebüberlauf verbleiben.

Beim Übergang von der ersten zur zweiten Stufe des Scheibensiebs 4 fallen die Bestandteile des Gemischs 20 ein Stück herab, so dass sich einige Aluminiumflachproduktstücke 22 umdrehen und so etwaige eingeklemmte Zwischenlagenstücke 24 freigeben, so dass diese leichte in den Siebunterlauf gelangen können.

Der Mitnehmer 14 wirkt von oben auf das Scheibensieb 4, wobei der Materialstrom des über das Scheibensieb 4 geförderten Gemischs 20 zwischen den Mitnehmer 14 und die Scheiben 8 der Wellen 6a und 6b gelangt. Der Mitnehmer 14 kann dadurch auf Aluminiumflachproduktstücken 22 haftende Zwischenlagenstücke 24 abstreifen und damit eine bessere Materialtrennung ermöglichen. Diese Wirkung wird besonders durch den hohen Reibbeiwert der Mitnehmeroberfläche erreicht.

Die nicht-formstabilen Mitnehmerelemente 12 rotieren mit den Wellen 6 und wirken peitschenartig auf das Gemisch 20 ein, wobei sie durch Reibung Zwischenlagenstücke 24 mitnehmen und zwischen den Scheiben 8 des Scheibensiebs 4 in den Siebunterlauf führen. Diese Wirkung wird besonders durch den hohen Reibbeiwert der Mitnehmerelementoberfläche erreicht.

Unterhalb des Scheibensiebs 4 kann ein Transportband 30 angeordnet sein, mit dem die ausgesiebten Zwischenlagenstücke aus dem Siebunterlauf abgeführt werden können. Weiterhin kann an der Endseite 28 des Scheibensiebs 4 ein weiteres Transportband 32 angeordnet sein, mit dem die Aluminiumflachproduktstücke aus dem Siebüberlauf abgeführt werden können.

Mit dem zuvor beschriebenen Verfahren und der zuvor beschriebenen Siebvorrichtung 2 kann das Gemisch 20 bei geringem Bauraum, staubarm und auf wirtschaftliche Weise in seine Bestandteile getrennt werden, so dass die Aluminiumflachproduktstücke 22 und die nicht-metallischen Zwischenlagenstücke 24 als getrennte Materialströme 34, 36 abführbar sind.

## Patentansprüche

1. Verfahren zum Trennen von Aluminiumflachproduktstücken (22) und nicht-metallischen Zwischenlagenstücken (24), umfassend folgenden Schritt:
- Bereitstellen eines Gemischs (20) umfassend Aluminiumflachproduktstücke (22), bei denen es sich um lithografische Druckplattenträger und/oder lithografische Druckplatten, Stücke von lithografischen Druckplattenträgern und/oder von lithografischen Druckplatten oder bei der Herstellung von lithografischen Druckplatten anfallende Stücke von Aluminiumbändern handelt, und nicht-metallische Zwischenlagenstücke (24),
**dadurch gekennzeichnet,**
- **dass** das Verfahren weiterhin folgenden Schritt umfasst:
- Sieben des Gemisches (20) zur Trennung der nicht-metallischen Zwischenlagenstücke (24) von den Aluminiumflachproduktstücken (22), wobei das Sieben unter Verwendung eines Scheibensiebs (4), insbesondere eines Sternsiebs, erfolgt.

2. Verfahren nach Anspruch 1,
**dadurch gekennzeichnet** das das Sieben unter Verwendung einer Siebvorrichtung (2) zum Trennen von Aluminiumflachproduktstücken (22) und nicht-metallischen Zwischenlagenstücken (24) mit einem Scheibensieb (4), das mehrere hintereinander angeordnete, insbesondere drehbar gelagerte Wellen (6, 6a-c) umfasst, auf denen jeweils mehrere in axialer Richtung voneinander beabstandete Scheiben (8, 8^{I}, 8^{II}, 8^{III}, 8^{IV}, 8^{V}, 8^{VI}) angeordnet sind, erfolgt.

3. Verfahren nach Anspruch 1 oder 2,
**dadurch gekennzeichnet, dass** das Verfahren folgende Schritte umfasst:
- Abführen der Aluminiumflachproduktstücke (22) aus dem Siebüberlauf des Scheibensiebs (4) und
- Abführen der nicht-metallischen Zwischenlagenstücke (24) aus dem Siebunterlauf des Scheibensiebs (4).

4. Verfahren nach einem der Ansprüche 1 bis 3,
**dadurch gekennzeichnet, dass** das Gemisch (20) als nicht-metallische Zwischenlagenstücke (24) Stücke von Papierzwischenlagen und/oder von Kunststofffolien umfasst.

5. Verwendung einer Siebvorrichtung (2) mit einem Scheibensieb (4), das mehrere hintereinander angeordnete, insbesondere drehbar gelagerte Wellen (6, 6a-c) umfasst, auf denen jeweils mehrere in axialer Richtung voneinander beabstandete Scheiben (8, 8^{I}, 8^{II}, 8^{III}, 8^{IV}, 8^{V}, 8^{VI}) angeordnet sind, zum Trennen von Aluminiumflachproduktstücken (22) und von nicht-metallischen Zwischenlagenstücken (24), wobei es sich bei den Aluminiumflachproduktstücken um lithografische Druckplattenträger und/oder lithografische Druckplatten, Stücke von lithografischen Druckplattenträgern und/oder von lithografischen Druckplatten oder Stücke von Aluminiumbändern, die bei der Herstellung von lithografischen Druckplatten anfallen, handelt.

6. Verwendung nach Anspruch 5,
**dadurch gekennzeichnet, dass** die Scheiben (8, 8^{I}, 8^{II}, 8^{III}, 8^{IV}, 8^{V}, 8^{VI}) zweier benachbarter Wellen (6, 6a-c) jeweils derart versetzt zueinander angeordnet sind, dass die Scheiben (8, 8^{I}, 8^{II}, 8^{III}, 8^{IV}, 8^{V}, 8^{VI}) einer Welle (6, 6a-c) in axialer Richtung jeweils den Bereichen zwischen den Scheiben (8, 8^{I}, 8^{II}, 8^{III}, 8^{IV}, 8^{V}, 8^{VI}) der benachbarten Welle (6, 6a-c) angeordnet sind.

7. Verwendung nach Anspruch 5 oder 6,
**dadurch gekennzeichnet, dass** eine Welle (6, 6a-c) ein drehfest mit der Welle (6, 6a-c) verbundenes, vorzugsweise flexibles bzw. nicht-formstabiles Mitnehmerelement (12) aufweist, das sich vorzugsweise in radialer Richtung der Welle (6, 6a-c) über mindestens eine, vorzugsweise zwei benachbarte Scheiben (8, 8^{I}, 8^{II}, 8^{III}, 8^{IV}, 8^{V}, 8^{VI}) der Welle (6, 6a-c) hinaus erstreckt.

8. Verwendung nach Anspruch 7,
**dadurch gekennzeichnet, dass** das Mitnehmerelement (12) in axialer Richtung zwischen zwei benachbarten Scheiben (8, 8^{I}, 8^{II}, 8^{III}, 8^{IV}, 8^{V}, 8^{VI}) einer benachbarten Welle (6, 6a-c) angeordnet ist.

9. Verwendung nach einem der Ansprüche 5 bis 8,
**dadurch gekennzeichnet, dass** die Siebvorrichtung (2) einen von oben auf das Scheibensieb (4) einwirkenden Mitnehmer (14) aufweist, der in Siebrichtung zwischen zwei benachbarten Wellen (6, 6a-c) angeordnet ist.

10. Verwendung nach Anspruch 9,
**dadurch gekennzeichnet, dass** der Mitnehmer (14) mittels einer federnden Aufhängung (16) gelagert ist.

11. Verwendung nach einem der Ansprüche 5 bis 10,
**dadurch gekennzeichnet, dass** mindestens eine, vorzugsweise mehrere der Scheiben (8^{II}) als Sternscheiben ausgebildet sind.

12. Verwendung nach einem der Ansprüche 5 bis 11,
**dadurch gekennzeichnet, dass** das Scheibensieb (4) mehrstufig ausgebildet ist.

13. Verwendung nach einem der Ansprüche 5 bis 12,
**dadurch gekennzeichnet, dass** es sich bei den nicht-metallischen Zwischenlagenstücken (24) um Stücke von Papierzwischenlagen und/oder Kunststofffolien handelt.

## Claims

1. Method for separating aluminium flat product pieces (22) and non-metallic intermediate layer pieces (24), comprising the following step:
- providing a mixture (20) comprising aluminium flat product pieces (22), which are lithographic printing plate supports and/or lithographic printing plates, pieces of lithographic printing plate supports and/or of lithographic printing plates or which are pieces of aluminium strips accumulated during the production of lithographic printing plates, and non-metallic intermediate layer pieces (24), **characterised**
- **in that** the method further comprises the following step:
- screening the mixture (20) to separate the non-metallic intermediate layer pieces (24) from the aluminium flat product pieces (22), wherein the screening is performed using a disc screen (4), in particular a star screen.

2. Method according to claim 1, **characterised in that** the screening is performed using a screening device (2) to separate aluminium flat product pieces (22) and non-metallic intermediate layer pieces (24) with a disc screen (4), which comprises a plurality of, in particular rotatably mounted, shafts (6, 6a-c) arranged one behind the other, on each of which is arranged a plurality of discs (8, 81, 8^{II}, 8^{III}, 8^{IV}, 8^{V}, 8^{VI}) spaced apart from one another in the axial direction.

3. Method according to claim 1 or 2, **characterised in that** the method comprises the following steps:
- discharging the aluminium flat product pieces (22) from the screen overflow of the disc screen (4) and
- discharging the non-metallic intermediate layer pieces (24) from the screen underflow of the disc screen (4).

4. Method according to any one of claims 1 to 3, **characterised in that** the mixture (20) comprises, as non-metallic intermediate layer pieces (24), pieces of paper intermediate layers and/or of plastic foils.

5. Use of a screening device (2) with a disc screen (4), which comprises a plurality of, in particular rotatably mounted, shafts (6, 6a-c) arranged one behind the other, on each of which is arranged a plurality of discs (8, 8^{I}, 8^{II}, 8^{III}, 8^{IV}, 8^{V}, 8^{VI}) spaced apart from one another in the axial direction, for separating aluminium flat product pieces (22) and non-metallic intermediate layer pieces (24), wherein the aluminium flat product pieces are lithographic printing plate supports and/or lithographic printing plates, pieces of lithographic printing plate supports and/or of lithographic printing plates or which are pieces of aluminium strips accumulated during the production of lithographic printing plates.

6. Use according to claim 5, **characterised in that** the discs (8, 8^{I}, 8^{II}, 8^{III}, 8^{IV}, 8^{V}, 8^{VI}) of two adjacent shafts (6, 6a-c) are each arranged offset to one another in such manner that the discs (8, 8^{I}, 8^{II}, 8^{III}, 8^{IV}, 8^{V}, 8^{VI}) of one shaft (6, 6a-c) are each arranged in the axial direction in the regions between the discs (8, 8^{I}, 8^{II}, 8^{III}, 8^{IV}, 8v, 8^{VI}) of the adjacent shaft (6, 6a-c).

7. Use according to claim 5 or 6, **characterised in that** a shaft (6, 6a-c) has a cam element (12) which is connected in a torsion-proof manner to the shaft (6, 6a-c) and is preferably flexible or not dimensionally stable and preferably extends in the radial direction of the shaft (6, 6a-c) beyond at least one, preferably two adjacent, discs (8, 8^{I}, 8^{II}, 8^{III}, 8^{IV}, 8^{V}, 8^{VI}) of the shaft (6, 6a-c).

8. Use according to claim 7, **characterised in that** the cam element (12) is arranged in the axial direction between two adjacent discs (8, 8^{I}, 8^{II}, 8^{III}, 8^{IV}, 8^{V}, 8^{VI}) of an adjacent shaft (6, 6a-c).

9. Use according to any one of claims 5 to 8, **characterised in that** the screening device (2) has a catch (14) which acts from above on the screen disc (4) and is arranged in the screening direction between two adjacent shafts (6, 6a-c).

10. Use according to claim 9, **characterised in that** the catch (14) is mounted by means of a resilient suspension (16).

11. Use according to any one of claims 5 to 10, **characterised in that** at least one, preferably a plurality of, discs (8II) are designed as star discs.

12. Use according to any one of claims 5 to 11, **characterised in that** the disc screen (4) is designed in a multi-stage manner.

13. Use according to any one of claims 5 to 12, **characterised in that** the non-metallic intermediate layer pieces (24) are pieces of paper intermediate layers and/or plastic foils.

## Revendications

1. Procédé de séparation de morceaux de produit plat en aluminium (22) et de morceaux d'intercalaire non métalliques (24), comprenant l'étape suivante :
- mise à disposition d'un mélange (20) comprenant des morceaux de produit plat en aluminium (22), lesquels sont des supports de plaques d'impression lithographiques et/ou des plaques d'impression lithographiques, des morceaux de supports de plaques d'impression lithographiques et/ou des plaques d'impression lithographiques ou des morceaux de bandes d'aluminium résultant de la fabrication de plaques d'impression lithographiques, et des morceaux d'intercalaire non métalliques (24),
**caractérisé**
**en ce que** le procédé comprend en outre l'étape suivante :
- tamiser le mélange (20) pour séparer les morceaux d'intercalaire non métalliques (24) des morceaux de produit plat en aluminium (22), le tamisage étant effectué en utilisant un tamis à disques (4), en particulier un tamis à étoiles.

2. Procédé selon la revendication 1,
**caractérisé en ce que** le tamisage s'effectue en utilisant un dispositif de tamisage (2) pour séparer des morceaux de produit plat en aluminium (22) et des morceaux d'intercalaire non métalliques (24) avec un tamis à disques (4), lequel comprend plusieurs arbres (6, 6a-c) disposés les uns derrière les autres, en particulier montés rotatifs, sur lesquels sont disposés respectivement plusieurs disques (8^{I}, 8^{II}, 8^{III}, 8^{IV}, 8^{V}, 8^{VI}) espacés les uns des autres dans la direction axiale.

3. Procédé selon la revendication 1 ou 2,
**caractérisé en ce que** le procédé comprend les étapes suivantes :
- évacuation des morceaux de produit plat en aluminium (22) du trop-plein du tamis à disques (4) et
- évacuation des morceaux d'intercalaire non métalliques (24) de la partie de sous-écoulement du tamis à disques (4).

4. Procédé selon l'une quelconque des revendications 1 à 3,
**caractérisé en ce que** le mélange (20) comprend, en tant que morceaux d'intercalaire non métalliques (24), des morceaux d'intercalaire en papier et/ou de films plastiques.

5. Utilisation d'un dispositif de tamisage (2) avec un tamis à disques (4), qui comprend plusieurs arbres (6, 6a-c) disposés les uns derrière les autres, en particulier montés rotatifs, sur lesquels sont disposés respectivement plusieurs disques (8^{I}, 8^{II}, 8^{III}, 8^{IV}, 8^{V}, 8^{VI}) espacés les uns des autres dans la direction axiale, pour séparer des morceaux de produit plat en aluminium (22) et des morceaux d'intercalaire non métalliques (24), les morceaux de produits plats en aluminium étant des supports de plaques d'impression lithographiques et/ou des plaques d'impression lithographiques, des morceaux de support de plaques d'impression lithographiques et/ou de plaques d'impression lithographiques ou des morceaux de bandes d'aluminium résultant de la fabrication de plaques d'impression lithographiques.

6. Utilisation selon la revendication 5,
**caractérisée en ce que** les disques (8^{I}, 8^{II}, 8^{III}, 8^{IV}, 8^{V}, 8^{VI}) de deux arbres voisins (6, 6a-c) sont respectivement décalés les uns par rapport aux autres de telle sorte que les disques (8^{I}, 8^{II}, 8^{III}, 8^{IV}, 8^{V}, 8^{VI}) d'un arbre (6, 6a-c) soient disposés, dans la direction axiale, respectivement dans les zones entre les disques (8^{I}, 8^{II}, 8^{III}, 8^{IV}, 8^{V}, 8^{VI}) de l'arbre voisin (6, 6a-c).

7. Utilisation selon la revendication 5 ou 6,
**caractérisée en ce qu'**un arbre (6, 6a-c) comporte un élément d'entraînement (12), de préférence flexible ou non indéformable, lié de manière solidaire en rotation avec l'arbre (6, 6a-c), qui s'étend de préférence dans la direction radiale de l'arbre (6, 6a-c) au-delà d'au moins un, de préférence deux disques adjacents (8^{I}, 8^{II}, 8^{III}, 8^{IV}, 8^{V}, 8^{VI}) de l'arbre (6, 6a-c).

8. Utilisation selon la revendication 7,
**caractérisée en ce que** l'élément d'entraînement (12) est disposé axialement entre deux disques adjacents (8^{I}, 8^{II}, 8^{III}, 8^{IV}, 8^{V}, 8^{VI}) d'un arbre adjacent (6, 6a-c).

9. Utilisation selon l'une quelconque des revendications 5 à 8,
**caractérisée en ce que** le dispositif de tamisage (2) comporte un entraîneur (14) agissant par le haut sur le tamis à disques (4), lequel entraîneur est disposé entre deux arbres voisins (6, 6a-c) dans la direction du tamisage.

10. Utilisation selon la revendication 9,
**caractérisée en ce que** l'entraîneur (14) est monté au moyen d'une suspension élastique (16).

11. Utilisation selon l'une des revendications 5 à 10,
**caractérisée en ce qu'**au moins un, de préférence plusieurs des disques (8^{II}) sont formé en tant que disques en étoile.

12. Utilisation selon l'une des revendications 5 à 11,
**caractérisée en ce que** le tamis à disques (4) est formé de plusieurs étages.

13. Utilisation selon l'une des revendications 5 à 12,
**caractérisée en ce que** les morceaux d'intercalaire non métalliques (24) sont des morceaux d'intercalaires en papier et/ou de films plastiques.
